# EUROPÄISCHE PATENTSCHRIFT

(11) **EP 2 547 924 B1**
(45) Veröffentlichungstag und Bekanntmachung des Hinweises auf die Patenterteilung: **08.01.2014**
(21) Anmeldenummer: 11708786.6
(22) Anmeldetag: 09.03.2011
(51) Int. Cl.: F16C 25/08, F16C 33/60, B62D 5/04, F16C 35/067

(54) **SERVOLENKUNG**
POWER STEERING SYSTEM
SERVODIRECTION

(30) Priorität: 17.03.2010 DE 102010002958
(43) Veröffentlichungstag der Anmeldung: 23.01.2013
(73) Patentinhaber: ZF-Lenksysteme GmbH, 73527 Schwäbisch Gmünd (DE)
(72) Erfinder: FRÖHLICH, Stefan, 73568 Zimmerbach (DE)
(86) Internationale Anmeldenummer: PCT/EP2011/053507
(87) Internationale Veröffentlichungsnummer: WO 2011/113730

(56) Entgegenhaltungen:
- WO-A1-2009/109357
- DE-A1- 4 231 272
- DE-A1- 10 310 492
- JP-A- 2009 079 696
- JP-U- H0 425 025

## Beschreibung

Die Erfindung betrifft eine Servolenkung, insbesondere eine elektrische Hilfskraftlenkung für ein Fahrzeug, mit einem, von einem Servomotor angetriebenen, rotierenden Bauteil, nach dem Oberbegriff des Anspruches 1.

Die DE 103 10 492 A1 zeigt und beschreibt eine elektrische Servolenkung wobei ein Servomotor ein axial verlagerbares Bauelement antreibt, das mit seinem Kugelgewinde in Eingriff mit einem Muttergewinde einer axial unverschieblich in einem Gestell gelagerten Mutter ist. Die Mutter ist mit einer Riemenscheibe eines Zugmittelgetriebes zwischen dem Servomotor und der so gebildeten Bewegungsschraube drehfest verbunden. Die Mutter ist über ein Radial-Festlager an dem Gestell abgestützt und gelagert. Das Radiallager ist als Wälzlager und insbesondere als Vierpunktlager gebildet, da insbesondere auch Axialkräfte aufzunehmen sind.

Durch geeignete Maßnahmen sind die Spiele des Vierpunktlagers und Klappergeräusche der Lagerung, hervorgerufen durch im Betrieb der Servolenkung rasch wechselnde Axialkräfte auf die Lagerringe und Wälzkörper reduziert.

In Servolenkungen sind weiterhin rotierende Bauteile bekannt, die mit Wälzlagern gelagert sind, wobei die Wälzlager beispielsweise bei der Lagerung einer Lenkmutter eines Lenkstockgetriebes, Axialkräfte aufzunehmen haben.

Die im Betrieb solcher Servolenkungen auftretenden, rasch wechselnden Axialkräfte auf die Lagerringe eines dahingehenden Wälzlagers verursachen jedoch insbesondere durch unterschiedliche Erwärmung der Lagerringe des Wälzlagers zu Betriebsbeginn der Servolenkung Spielveränderungen in dem Wälzlager. Durch diese Spielveränderungen können unter Umständen zu Beginn eines Betriebes einer Servolenkung gelegentlich Klappergeräusche entstehen, bis sich durch eine gleichmäßige Erwärmung der Bauteile des Wälzlagers letztendlich das konstruktiv vorgegebene Betriebsspiel einstellt. Bei tiefen Betriebstemperaturen ist das Lagerspiel unvorteilhaft in Bezug auf Lagerreibung.

Die bekannten Wälzlagerbauarten sind bei dem speziellen Anwendungsbereich in einer Servolenkung nicht immer in der Lage, in der genannten Betriebsphase eine Geräuschentwicklung zu verhindern.

Der Erfindung liegt die Aufgabe zugrunde, eine Servolenkung anzugeben, deren Betriebsgeräusch und deren Reibung minimiert sind.

Die Aufgabe wird mit einer Servolenkung mit den Merkmalen des Anspruches 1 gelöst.

Dadurch dass ein Aussenring oder ein Innenring des Wälzlagers entlang einer etwa senkrecht zu einer Längsachse des axial rotierenden Bauteiles verlaufenden Trennebene in zwei Ringhälften oder Ringteile geteilt ist, die axial gegeneinander angefedert sind, wobei die zueinander gerichteten Stirnflächen der Ringhälften mit einem Winkel von ihrer radialen Aussenseite zu ihrer radialen Innenseite zueinander gerichtet sind und zwischen den Stirnflächen ein im Querschnitt kegelförmiges Bauelement mit einem höheren Wärmeausdehnungskoeffizienten als dem Wärmeausdehnungskoeffizienten des Aussenringes oder Innenringes angeordnet ist, ist eine Möglichkeit geschaffen, das Wälzlager bzw. dessen Lagerspiel an die aktuelle Betriebstemperatur anzupassen, bzw. über die Betriebstemperatur ein konstantes Lagerspiel zu ermöglichen. Das Bauelement mit einem höheren Wärmeausdehnungskoeffizient ist aufgrund seines kegelförmig sich zu dem Zentrum des Wälzlagers sich verjüngenden Querschnitt in der Lage, bei einer Ausdehnung radial nach außen in Richtung auf ein Lagernest zu wandern und bei einer Schrumpfung durch Kälteeinwirkung radial in Richtung auf das Zentrum des Wälzlagers sich zu bewegen. Bei einer Dehnung des Bauelements mit größerem Wärmeausdehnungskoeffizienten werden die Ringhälften aufgrund ihrer Anfederung aufeinander zu bewegt. Dadurch werden die Flanken der Lagernut in den Ringhälften auf die Wälzkörper des Wälzlagers zu bewegt und das Lagerspiel wird an die höhere Lagertemperatur wieder angepasst. Bei einer kältebedingten Schrumpfung des Bauelements mit größerem Wärmeausdehnungskoeffizient wandern die Ringhälften axial auseinander und das Lagerspiel wird angepasst an die tieferen Temperaturen.

Bevorzugte Ausführungsbeispiele ergeben sich aus den Unteransprüchen.

In einem besonders bevorzugten Ausführungsbeispiel ist das von dem Servomotor angetriebene rotierende Bauteil eine weitestgehend axial unverschieblich in dem Gestell gelagerte Mutter, die mit einem axial verlagerbaren Bauelement, dessen Gewinde mit dem Muttergewinde der Mutter in Eingriff ist, eine Bewegungsschraube bildet und von dem Wälzlager in dem Gestell gelagert ist.

Es können ein einziges oder mehrere Federelemente die Ringhälften gegeneinander anfedern.

Es hat sich gezeigt, dass unerwünschtes Lagerspiel bei Wälzlagern mit ungeteilten Lagerringen in der betreffenden Einbausituation in einem Lenkgetriebe der gattungsgemäßen Art dadurch entstehen kann, dass sich in zeitliche Abfolge zuerst der Aussenring des Wälzlagers durch Wärmeleitung von einer Brennkraftmaschine an ein Gestell oder Gehäuse der Servolenkung erwärmt und anschließend der Innenring. Dabei weitet sich der Außenring, sodaß die Schultern sich radial von der Lagerlängsachse wegbewegen. Es ist daher zweckmäßig, zum einen den Außenring in zwei Ringteile oder -hälften in radialer Richtung zu teilen und das Bauelement mit höherem Wärmeausdehnungskoeffizienten zwischen den Ringhälften als Ring mit kegelartigem oder teilkegelartigem Querschnitt anzuordnen. Der Kegelwinkel an jeder Flanke des Bauelements ist dabei vorzugsweise etwa zwischen 5° und 50° gewählt. Die radiale Dehnung, die das ringförmige Bauelement mit höherem Wärmeausdehnungskoeffizienten macht ist abhängig von seinen Abmaßen. Die geometrische Größen des Bauelements ist abhängig von der Gesamtgröße und den am Ort seines Einbaues herrschenden Betriebstemperaturen. Der Innenradius des Bauelementes ist größer gewählt, als der größte Innenradius des Aussenringes, sodaß sich das Bauelement radial dehnen kann ohne entweder mit den Wälzkörpern oder mit einer Anlagefläche des Außenumfanges des Außenringes in Kontakt zu kommen. Sinnfällig gelten dieselben Verhältnisse bei einem an einem Innenring vorgesehenen Bauelement mit höherem Wärmeausdehnungskoeffizienten. Entweder durch die Dimensionierung des ringförmigen Bauelements und/oder durch geeignete Aussparungen in dem Gestell ist eine radiale Bewegung des ringförmigen Bauelements möglich.

Der Wärmeausdehnungskoeffizient α_{B} des Bauelementes liegt bevorzugt zwischen demjenigen von Stahl und Aluminium, also zwischen etwa 26 x 10⁻⁶K⁻¹ und 16 x 10⁻⁶K⁻¹. Bevorzugt wird ein Material wie Aluminium oder Messing für die Herstellung des Bauelementes verwendet.

Die beiden Ringhälften werden bevorzugt mit entgegengesetzt in axialer Richtung zueinander wirkenden Federelementen angefedert. Die Federelemente können aus einem elastomeren Material oder als Stahlfedern in mannigfacher Gestalt, etwa als Wellfedern, Tellerfedern oder als Schraubendruckfedern, die in Abständen zueinander um den Seitenumfang der Ringhälften angeordnet sind, gebildet sein. Die Schraubendruckfedern stützen sich zwischen dem das Lagernest bildenden Gestell oder gestellfesten Bauteil und den Stirnflächen der Ringhälften des Aussen- oder Innenringes ab.

Es kann auch zweckmäßig sein, das Federelement in der Art einer Federklammer oder einer Mehrzahl an solchen Federelementen auszubilden, die die Ringhälften axial übergreifen oder durch Öffnungen an diesen durchgreifen. Der Aussenring oder der Innenring weisen bevorzugt einen symmetrischen Querschnitt relativ zu der radialen Trennebene auf.

Es ist zweckmäßig, das Wälzlager als Kugellager, insbesondere als Rillenkugellager zu bilden. Es kann ein- oder zweireihig sein, oder als Vierpunktlager oder durch zwei Schrägkugellager gebildet sein. Das axial verlagerbare Bauelement ist als Spindel oder Zahnstangen- Gewindeabschnitt gebildet. Das axial verlagerbare Bauelement kann in an sich bekannter Weise über Spurstangen und Radlenkhebel mit lenkbaren Rädern eines Kraftfahrzeugs verbunden sein. Der Gewindeabschnitt oder die Spindel wirkt mit der zu lagernden Mutter zusammen, wobei die so gebildete Bewegungsschraube Teil eines Lenkgetriebes einer elektrischen oder hydraulischen Hilfskraftlenkung oder Fremdkraftlenkung ist. Das Gestell ist als Lenkgetriebegehäuse dargestellt, das somit eine konstruktive Einheit für ein dadurch dargestelltes Kugelmutter-Spindelgetriebe oder Kugelmutter- Hydrogetriebe bildet.

Vorzugsweise ist der Servomotor als Elektromotor in Pulsweiten-Modulation gesteuert und seine Längsachse ist parallel zu der Zahnstange oder Spindel angeordnet, sodaß die Servolenkung vorzugsweise als achsparallele elektrische Servolenkung gebildet ist.

Die Motorwelle des Elektromotors ist drehfest mit einer Riemenscheibe verbunden. Ein darauf laufender Riemen ist zudem über eine Riemenscheibe auf oder an der Mutter aufgespannt. Die beiden Riemenscheiben bilden ein selbstspannendes Zugmittelgetriebe. Der Riemen kann als Zahnriemen gebildet sein. Es kann auch eine Kombination zweier verschiedener Riemenbauarten in dem Zugmittelgetriebe verbaut sein. Es kann anstelle eines selbstspannenden Zugmittelgetriebes der Servomotor verlagerbar relativ zu der Längsachse des axial verlagerbaren Bauelements und der Mutter vorgesehen sein.

Die Erfindung wird nun näher anhand eines Ausführungsbeispiels beschrieben und anhand der Zeichnung wiedergegeben. In der Zeichnung zeigen:
- Fig. 1: einen teilweisen Längsschnitt durch eine erfindungsgemäße Servolenkung,
- Fig. 2: einen schematischen nicht maßstäblichen Querschnitt durch ein Wälzlager für die Mutter der Servolenkung in Fig. 1.

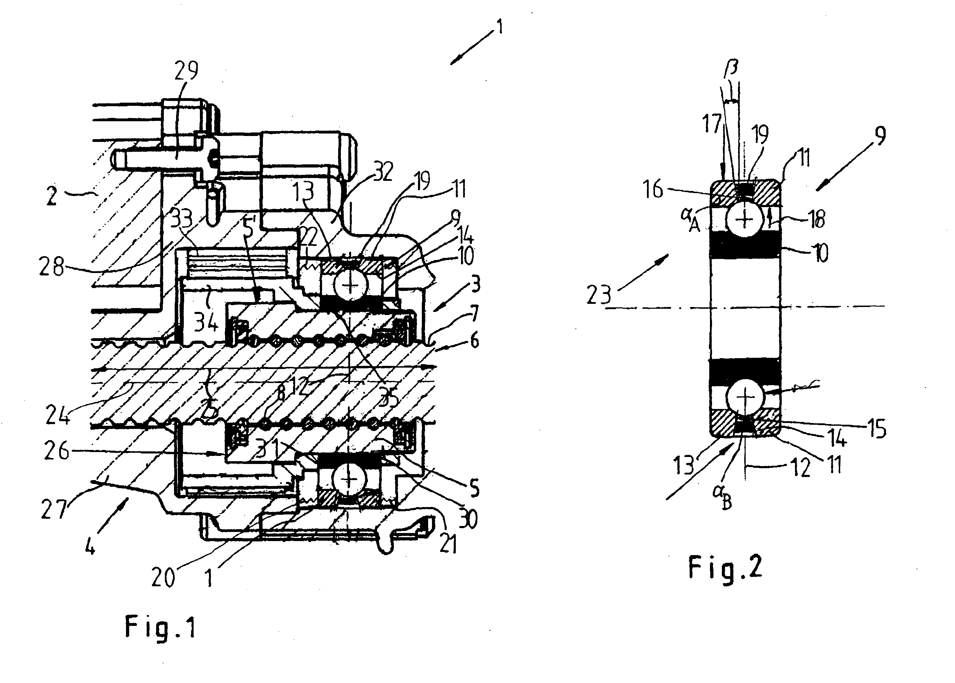

In Fig. 1 ist ein teilweiser Längsschnitt durch eine als elektrische Hilfskraftlenkung gebildete Servolenkung 1 für einen Personenkraftwagen gezeigt. Wesentliche Bauteile der Servolenkung 1 sind ein als geschlossenes Lenkgetriebegehäuse 27 gebildetes Gestell 4 aus Aluminiumdruckguß. Das Lenkgetriebegehäuse 27 weist einen Radialflansch 28 auf, an dem mittels Schraubbolzen 29 ein elektrischer Servomotor 2 angeschraubt ist. Der elektrische Servomotor 2 dient zur Bereitstellung einer Lenkhilfskraft auf einen Gewindeabschnitt 25 einer Zahnstange 24. Die Zahnstange 24 stellt ein axial verlagerbares Bauelement 6 in dem Lenkgetriebegehäuse 27 dar. An nicht gezeigten axialen Enden der Zahnstange 24 sind gelenkig Spurstangen festgelegt, die mit Radlenkhebeln gelenkter Räder des Personenkraftwagens zur Lenkwinkelverstellung der Räder bei einer Axialverschiebung der Zahnstange 24 dienen.

Der Gewindeabschnitt 25 der Zahnstange 24 ist mit seinem Gewinde 7 mit einem Muttergewinde 8 eines als Mutter 5 gebildeten rotierenden Bauteils 5' in Eingriff. Die Mutter 5 ist als Kugelmutter 26 oder Kugelumlaufmutter gebildet. Eine von dem elektrischen Servomotor 2 angetriebene Bewegungsschraube 3 ist dadurch gebildet. Die Kugelmutter 26 ist um den Gewindeabschnitt 25 in dem Gestell 4 rotierbar gelagert, aber axial weitgehendst unverschieblich angeordnet. Die Kugelmutter 26 ist axial und radial über einen als Innenring 10 gebildeten Lagerring und einen als Außenring 11 gebildeten Lagerring eines Wälzlagers 9 in dem Gestell 4 oder Lenkgetriebegehäuse 27 gelagert. Das Wälzlager 9 ist als Kugellager 23 gebildet. Der Innenring 10 des Wälzlagers 9 ist zwischen zwei Anschlägen 30, 31 in einem Gehäusedeckel 32 des Lenkgetriebegehäuses 27 festgelegt. Der elektrische Servomotor 2 ist über ein Zugmittelgetriebe mit der Mutter 5 wirkverbunden, wobei ein als Zahnriemen gebildeter Riemen 33 auf einer Riemenscheibe 34 an der Mutter 5 abläuft. Die Riemenscheibe 34 ist in der Art einer stufenzylindrischen Hülse gebildet und bildet mit ihrer, dem Wälzlager 9 zugewandten Stirnseite 35 den Anschlag 31 für den Innenring 10. Der Riemen 33 läuft ferner auf einer nicht gezeigten Riemenscheibe, die drehfest mit einer Motorwelle des elektrischen Servomotors 2 verbunden ist, ab.

Der Servomotor 2 wird nach Maßgabe von Sensorsignalen, die einen gewünschten Lenkwinkel und einen Radlenkwinkel abbilden, von einer nicht gezeigten Steuer- und/oder Regelungseinrichtung angesteuert. Dadurch wird die Mutter in die eine oder andere Richtung gedreht und die Zahnstange 24 in die eine oder andere Richtung verschoben. Auf die Mutter 5 werden andererseits Axialkräfte, die von den Radreaktionskräften abgeleitet sind, eingeleitet. Zudem ergeben sich bei Lenkbewegungen an einer Lenkhandhabe in die eine oder andere Richtung wechselnde Axialkräfte an der Mutter 5, die auf das Wälzlager 9 wirken. Zu Betriebsbeginn erwärmt sich der Aussenring 11 des Wälzlagers 9 zuerst, da Wärme in der Regel aus einem Motorraum, in dem das Lenkgetriebegehäuse 27 montiert ist, zunächst von außen an das Lenkgetriebegehäuse 27 und den Gehäusedeckel 32 gestrahlt wird.

Wie insbesondere Fig. 2 zeigt, ist der Aussenring 11 entlang einer mittig in radialer Richtung des Wälzlagers 9 verlaufenden Trennebene 12 in zwei symmetrisch zu dieser Trennebene 12 gebildete Ringhälften 13,14 aufgeteilt. Dabei sind jeweils die auf die Trennebene 12 zugewandten Stirnflächen 15,16 der Ringhälften 13,14 nicht parallel zu der Trennebene 12 geführt, sondern die Stirnflächen 15,16 laufen von der in radialer Richtung des Wälzlagers 9 betrachtet, Aussenseite 17 zu der Innenseite 18 in einem Winkel β zu der Trennebene 12 hin. Dadurch ist ein ringförmiger Zwischenraum mit kegelförmigem oder kegelstumpfförmigem Querschnitt zwischen die Ringhälften 13,14 gelegt. Dieser Zwischenraum wird durch ein ebenfalls ringförmiges Bauelement 19 mit einem höheren Wärmeausdehnungskoeffizienten α_{B} (in der Größe dessen von Aluminium) als der Wärmeausdehnungskoeffizient α_{A} des Aussenringes und Innenringes teilweise ausgefüllt, dahingehend, dass das Bauelement zur Lageraussenseite und Innenseite oder zur Aussenseite 17 und Innenseite 18 des Aussenringes 11 einen radialen Abstand behält. Diese radial geringeren Abmessungen des Bauelementes 19 sind erforderlich, da das Bauelement 19 sich bei Wärme - oder Kälteeinwirkung wesentlich mehr in radialer Richtung dehnt oder zusammenzieht. Bei der dahingehenden radialen Bewegung des Bauelementes 19 werden die beiden Ringhälften 13,14 in axialer Richtung auseinanderbewegt (beim Zusammenziehen des Bauelements 19 unter Kälteeinwirkung) und aufeinander zu bewegt (beim Dehnen des Bauelements 19 unter Einwirkung von Hitze).

Die Ringhälften 13,14 sind durch als Schraubendruckfedern 22 gebildete Federelemente 20, 21 gegeneinander angefedert. Dazu stützen sich die um den gesamten Umfang des Wälzlagers 9 in gleichen tangentialen Abständen angeordneten Federelemente 20,21 zwischen den Anschlägen 30, 31 und der jeweiligen Ringhälfte bzw. deren axialen Stirnflächen ab.

Durch die Gestaltung des erfindungsgemäßen Wälzlagers 9 ist ein stets gleichbleibendes Lagerspiel ermöglicht und eine Geräuschbildung und Reibung in dem Wälzlager 9 vermieden, da während des Betriebes auftretende Wärmedehnungen des Wälzlagers 9 keinen Einfluß auf die Toleranzen des Wälzlagers 9 haben, da diese ausgeglichen sind.

## Patentansprüche

1. Servolenkung, insbesondere elektrische Hilfskraftlenkung für ein Fahrzeug, mit einem, von einem Servomotor (2) angetriebenen rotierenden Bauteil (5') in einem Gestell (4) und mit einem Wälzlager (9) zur axialen und radialen Lagerung des Bauteils (5') in dem Gestell (4), **dadurch gekennzeichnet, dass** zumindest ein Innenring (10) oder ein Aussenring (11) des Wälzlagers (9) entlang einer etwa senkrecht zu einer Längsachse des rotierenden Bauteiles (5') verlaufenden Trennebene (12) in zwei Ringteile (13,14) geteilt ist, die axial gegeneinander angefedert sind, und dass die zueinander gerichteten Stirnflächen (15,16) der Ringteile (13,14) mit einem Winkel (β) von ihrer radialen Aussenseite (17) zu ihrer radialen Innenseite (18) zueinander gerichtet sind und zwischen den Stirnflächen (15,16) ein im Querschnitt kegelförmiges Bauelement (19) mit einem höheren Wärmeausdehnungskoeffizient (α_{B}) als dem Wärmeausdehnungskoeffizienten (α_{A}) des Aussenrings (11) oder Innenringes (10) angeordnet ist und dass bei Wärmeeinleitung das Bauelement (19) sich radial so ausdehnt, dass die Ringteile (13,14) axial zueinander bewegt sind und dass bei einer Abkühlung das Bauelement (19) sich radial zusammenzieht und die Ringteile (13,14) axial auseinanderbewegt sind.

2. Servolenkung nach Anspruch 1, **dadurch gekennzeichnet, dass** das Bauteil (5') eine axial weitestgehend unverschieblich in dem Gestell (4) gelagerte Mutter (5) ist, die mit einem axial verlagerbaren Bauelement (6), dessen Gewinde (7) mit einem Muttergewinde (8) der Mutter (5) in Eingriff ist, eine Bewegungsschraube (3) bildet und von dem Wälzlager (9) in dem Gestell (4) gelagert ist.

3. Servolenkung nach Anspruch 1 oder 2, **dadurch gekennzeichnet, dass** die Ringteile (13,14) mit zumindest einem Federelement (20) gegeneinander angefedert sind.

4. Servolenkung nach einem der Ansprüche 1 oder 3, **dadurch gekennzeichnet, dass** das im Querschnitt kegelförmige Bauelement (19) Ringform aufweist.

5. Servolenkung nach einem der Ansprüche 1 bis 4, **dadurch gekennzeichnet, daß** das im Querschnitt kegelförmige Bauelement (19) einen Wärmeausdehnungskoeffizienten (α_{B}) zwischen etwa 26 x 10⁻⁶K⁻¹ und 16 x 10⁻⁶K⁻¹ bei etwa 100 °C aufweist.

6. Servolenkung nach einem der Ansprüche 1 bis 5, **dadurch gekennzeichnet, daß** der Winkel (β) größer als 5 ° ist.

7. Servolenkung nach einem der Ansprüche 1 bis 6, **dadurch gekennzeichnet, dass** das im Querschnitt kegelförmige Bauelement (19) aus Aluminium oder Messing oder einer deren Legierungen gebildet ist.

8. Servolenkung nach einem der Ansprüche 1 bis 7, **dadurch gekennzeichnet, dass** beide Ringteile (13,14) mit entgegengerichtet zueinander wirkenden Federelementen (20,21) angefedert sind.

9. Servolenkung nach Anspruch 8, **dadurch gekennzeichnet, dass** die Federelemente (20,21) aus einem elastomeren Werkstoff gebildet sind.

10. Servolenkung nach Anspruch 8 oder 9, **dadurch gekennzeichnet, dass** die Federelemente (20,21) Tellerfedern oder Wellfedern oder Schraubendruckfedern (22) sind, die in Abständen zueinander umfangsseitig um die Ringteile (13,14) sich zwischen dem Gestell (4) oder einem gestellfesten Bauteil und den Ringhälften (13,14) abstützen.

11. Servolenkung nach einem der Ansprüche 1 bis 10, **dadurch gekennzeichnet, daß** das Federelement (20) oder eine Mehrzahl an Federelementen (20,21) die zwei Ringteile (13,14) axial durchgreifen oder übergreifen und eine axiale Zugkraft, die die beiden Ringteile (13,14) gegeneinander zieht, aufbringt.

12. Servolenkung nach einem der Ansprüche 1 bis 11, **dadurch gekennzeichnet, daß** der Innenring (10) und der Aussenring (11) des Wälzlagers (9) einen symmetrischen Querschnitt relativ zu der Trennebene (12) aufweisen.

13. Servolenkung nach einem der Ansprüche 1 bis 12, **dadurch gekennzeichnet, daß** das Wälzlager (9) ein Kugellager (23), ein Rillenkugellager oder ein Vierpunktlager oder zwei Schrägkugellager ist.

14. Servolenkung nach einem der Ansprüche 2 bis 13, **dadurch gekennzeichnet, daß** das axial verlagerbare Bauelement (6) eine Spindel oder Zahnstange mit einem Gewindeabschnitt (25) ist, um die eine axial unverschieblich gelagerte Kugelmutter (26) rotiert.

15. Servolenkung nach einem der Ansprüche 1 bis 14, **dadurch gekennzeichnet, daß** die Servolenkung (1) eine elektrische Hilfskraftlenkung mit achsparalleler Anordnung des Servomotors (2) und des axial verlagerbaren Bauelements (6) ist.

## Claims

1. Power steering system, in particular electric power-assisted steering system for a vehicle, having a rotating component (5') in a frame (4), which rotating component (5') is driven by a servomotor (2), and having an anti-friction bearing (9) for axial and radial mounting of the component (5') in the frame (4), **characterized in that** at least an inner ring (10) or an outer ring (11) of the anti-friction bearing (9) is divided into two ring parts (13, 14) along a dividing plane (12) which runs approximately perpendicularly with respect to a longitudinal axis of the rotating component (5'), which ring parts (13, 14) are sprung axially against one another, and **in that** those end faces (-15, 16) of the ring parts (13, 14) which are directed towards one another are directed with respect to one another at an angle (β) from their radial outer side (17) to their radial inner side (18), and a structural element (19) of conical cross section with a higher coefficient of thermal expansion (α_{A}) than that of the outer ring (11) or inner ring (10) is arranged between the end faces (15, 16), and **in that**, upon the introduction of heat, the structural element (19) expands radially in such a way that the ring parts (13, 14) are moved axially towards one another, and that, upon cooling, the structural element (19) contracts radially and the ring parts (13, 14) are moved axially apart from one another.

2. Power steering system according to Claim 1, **characterized in that** the component (5') is a nut (5) which is mounted as far as possible axially non-displaceably in the frame (4), forms a drive screw (3) with an axially displaceable structural element (6), the thread (7) of which is in engagement with a nut thread (8) of the nut (5), and is mounted by the anti-friction bearing (9) in the frame (4).

3. Power steering system according to Claim 1 or 2, **characterized in that** the ring parts (13, 14) are sprung against one another by way of at least one spring element (20).

4. Power steering system according to one of Claims 1 to 3, **characterized in that** the structural element (19) of conical cross section has a ring shape.

5. Power steering system according to one of Claims 1 to 4, **characterized in that** the structural element (19) of conical cross section has a coefficient of thermal expansion (α_{B}) between approximately 26 x 10⁻⁶K⁻¹ and 16 x 10⁻⁶K⁻¹ at approximately 100°C.

6. Power steering system according to one of Claims 1 to 5, **characterized in that** the angle (β) is greater than 5°.

7. Power steering system according to one of Claims 1 to 6, **characterized in that** the structural element (19) of conical cross section is formed from aluminium or brass or one of their alloys.

8. Power steering system according to one of Claims 1 to 7, **characterized in that** both ring parts (13, 14) are sprung by way of spring elements (20, 21) which act in opposite directions to one another.

9. Power steering system according to Claim 8, **characterized in that** the spring elements (20, 21) are formed from an elastomeric material.

10. Power steering system according to Claim 8 or 9, **characterized in that** the spring elements (20, 21) are disc springs or corrugated springs or compression coil springs (22) which are supported at spacings from one another on the circumferential side around the ring parts (13, 14) between the frame (4) or a component fixed to the frame and the ring haves (13, 14).

11. Power steering system according to one of Claims 1 to 10, **characterized in that** the spring element (20) or a plurality of spring elements (20, 21) engages/engage axially through or over the two ring parts (13, 14) and applies/apply an axial tensile force which pulls the two ring parts (13, 14) against one another.

12. Power steering system according to one of Claims 1 to 11, **characterized in that** the inner ring (10) and the outer ring (11) of the anti-frictiom bearing (9) have a symmetrical cross section relative to the dividing plane (12).

13. Power steering system according to one of Claims 1 to 12, **characterized in that** the anti-friction bearing (9) is a ball bearing (23), a deep-groove ball bearing or a four-point bearing or two angular-contact ball bearings.

14. Power steering system according to one of Claims 2 to 13, **characterized in that** the axially displaceable structural element (6) is a spindle or toothed rack with a thread section (25), around which an axially non-displaceably mounted ball nut (26) rotates.

15. Power steering system according to one of Claims 1 to 14, **characterized in that** the power steering system (1) is an electric power-assisted steering system with an axially parallel arrangement of the servomotor (2) and the axially displaceable structural element (6).

## Revendications

1. Servodirection, en particulier direction assistée électrique pour un véhicule, comprenant un composant rotatif (5'), entraîné par un servomoteur (2), dans un bâti (4), et comprenant un palier à roulement (9) pour le support axial et radial du composant (5') dans le bâti (4), **caractérisée en ce qu'**au moins une bague intérieure (10) ou une bague extérieure (11) du palier à roulement (9) est divisée, le long d'un plan de séparation (12) s'étendant approximativement perpendiculairement à un axe longitudinal du composant rotatif (5'), en deux parties de bague (13, 14) qui sont sollicitées par ressort axialement l'une contre l'autre, et **en ce que** les surfaces frontales (15, 16), tournées l'une vers l'autre, des parties de bague (13, 14) sont orientées l'une par rapport à l'autre suivant un angle (β) à partir de leur côté extérieur radial (17) jusqu'à leur côté intérieur radial (18), et un élément structural (19) de section transversale conique présentant un coefficient de dilatation thermique (α_{B}) supérieur au coefficient de dilatation thermique (α_{A}) de la bague extérieure (11) ou de la bague intérieure (10) est disposé entre les surfaces frontales (15, 16), et **en ce que**, lors d'un apport de chaleur, l'élément structural (19) se dilate radialement de telle sorte que les parties de bague (13, 14) soient déplacées axialement l'une vers l'autre et **en ce que**, lors d'un refroidissement, l'élément structural (19) se contracte radialement et les parties de bague (13, 14) sont déplacées axialement à l'écart l'une de l'autre.

2. Servodirection selon la revendication 1, **caractérisée en ce que** le composant (5') est un écrou (5) monté dans le bâti (4) d'une manière le plus possible non déplaçable axialement, lequel écrou forme, conjointement avec un élément structural (6) déplaçable axialement, dont le filetage (7) est en prise avec un filetage intérieur (8) de l'écrou (5), une vis de commande (3) et est supporté dans le bâti (4) par le palier à roulement (9).

3. Servodirection selon la revendication 1 ou 2, **caractérisée en ce que** les parties de bague (13, 14) sont sollicitées par ressort l'une contre l'autre à l'aide d'au moins un élément ressort (20).

4. Servodirection selon l'une quelconque des revendications 1 ou 3, **caractérisée en ce que** l'élément structural (19) de section transversale conique présente une forme annulaire.

5. Servodirection selon l'une quelconque des revendications 1 à 4, **caractérisée en ce que** l'élément structural (19) de section transversale conique présente un coefficient de dilatation thermique (α_{B}) entre approximativement 26 x 10⁻⁶K⁻¹ et 16 x 10⁻⁶K⁻¹ à approximativement 100 °C.

6. Servodirection selon l'une quelconque des revendications 1 à 5, **caractérisée en ce que** l'angle (β) est supérieur à 5°.

7. Servodirection selon l'une quelconque des revendications 1 à 6, **caractérisée en ce que** l'élément structural (19) de section transversale conique est formé en aluminium ou en laiton ou en l'un de leurs alliages.

8. Servodirection selon l'une quelconque des revendications 1 à 7, **caractérisée en ce que** les deux parties de bague (13, 14) sont sollicitées par ressort à l'aide d'éléments ressort (20, 21) agissant en sens inverses l'un par rapport à l'autre.

9. Servodirection selon la revendication 8, **caractérisée en ce que** les éléments ressort (20, 21) sont formés en un matériau élastomère.

10. Servodirection selon la revendication 8 ou 9, **caractérisée en ce que** les éléments ressort (20, 21) sont des ressorts Belleville ou des ressorts ondulés ou des ressorts de compression hélicoïdaux (22) qui s'appuient à distance les uns des autres du côté périphérique autour des parties de bague (13, 14) entre le bâti (4) ou un composant solidaire du bâti et les moitiés de bague (13, 14).

11. Servodirection selon l'une quelconque des revendications 1 à 10, **caractérisée en ce que** l'élément ressort (20) ou une pluralité d'éléments ressort (20, 21) vien(nen)t en prise axialement à travers les deux parties de bague (13, 14) ou vien(nen)t en prise axialement par le dessus avec celles-ci, et applique(nt) une force de traction axiale qui attire les deux parties de bague (13, 14) l'une vers l'autre.

12. Servodirection selon l'une quelconque des revendications 1 à 11, **caractérisée en ce que** la bague intérieure (10) et la bague extérieure (11) du palier à roulement (9) présentent une section transversale symétrique par rapport au plan de séparation (12).

13. Servodirection selon l'une quelconque des revendications 1 à 12, **caractérisée en ce que** le palier à roulement (9) est un palier à billes (23), un palier rainuré à billes ou un palier à quatre points de contact ou deux paliers à billes à contact oblique.

14. Servodirection selon l'une quelconque des revendications 2 à 13, **caractérisée en ce que** l'élément structural (6) déplaçable axialement est une broche ou une crémaillère comprenant une portion filetée (25) autour de laquelle tourne un écrou à billes (26) monté de manière non déplaçable axialement.

15. Servodirection selon l'une quelconque des revendications 1 à 14, **caractérisée en ce que** la servodirection (1) est une direction assistée électrique avec agencement à axes parallèles du servomoteur (2) et de l'élément structural (6) déplaçable axialement.
